# EUROPEAN PATENT APPLICATION

(11) **EP 1 160 723 A2**
(43) Date of publication of application: **05.12.2001**
(21) Application number: 01304847.5
(22) Date of filing: 01.06.2001
(51) Int. Cl.: G06K 17/00

(54) **Recording the handling of articles**

(30) Priority: 03.06.2000 GB 0013475
(71) Applicant: Plescon Limited, Ipswich, Suffolk IP1 5AP (GB)
(72) Inventor: Crisp, Marvin, Wickham Market, Suffolk IP13 0RL (GB)
(74) Representative: Gillam, Francis Cyril

(57) **Abstract**

Apparatus for recording the handling of an article carrying a bar code and a security tag has a main frame 20 including an area on which the article may be placed. A sub-frame 22 is slidably supported on the main frame 20, a power-drive mechanism 26,29,31,32 being arranged to slide the sub-frame 22 between first and second spaced-apart positions. A bar code reader 23 is carried on the sub-frame 22 and is positioned to read the bar code of an article placed on the main frame. In addition, security tag operating means 24,25 is mounted on the sub-frame 22 and when operated is adapted to change the state of the security tag on an article. A control unit 35 activates the bar code reader when an article has been placed on the defined area of the main frame 20, and then causes the drive arrangement to cycle the sub-frame 22 between its first and second positions whilst the security tag operating means is activated, thereby to change the state of the article's security tag, provided a valid bar-code reading was performed on that article.

## Description

This invention relates to apparatus for recording the handling of an article, as well as to methods of recording such handling. In its preferred aspects, but not exclusively, this invention relates to the recording of the issue of a library book to a borrower of the book, from a library.

As will be appreciated from the following, this invention is primarily concerned with the issue of library books to borrowers, and in particular to self-issuing systems where the borrower himself uses equipment provided by a library to identify himself to that system, and moreover to issue to himself a book which he wishes to borrow. However, though the invention will be described expressly in relation to this primary use of the apparatus and method, it is to be understood that the invention is not limited to that use, and may be employed in other circumstances where the movement or handling of an article is to be recorded on a semi-automatic or automated basis.

Self-issuing systems are already in use in many libraries. It is a basic requirement of such a system that each book in the library carries a bar code which uniquely identifies the book, so that a computer installation associated with the self-issuing system may keep track of the issuing of books to borrowers by the reading of the bar code provided on the book. Further, in order to prevent a borrower either deliberately or accidentally by-passing the self-issuing system, each book must also carry a security tag which will cause an alarm to sound or other warning given in the event that a book is taken out of the library without the tag being de-activated beforehand. The self-issuing system should therefore be arranged automatically to de-activate the security tag, at the same time as reading the bar code.

Generally, the known forms of self-issuing systems include a conveyor or other mechanism on which a book is placed, so that the book may be transferred through suitable equipment in order to read the bar code on the book and also to de-activate the security tag. In addition, the equipment includes a card reader in which a borrower inserts his library card to identify himself to the computer installation, whereby the borrowing of a book identified on being transferred through the equipment is noted by the computer installation as being issued to that borrower. The computer installation may alert staff in the event that there may be some problem with lending a particular book to a particular borrower - for example, should the borrower already have borrowed the maximum permitted number of books.

A problem associated with the known forms of self-issuing systems is that they are not particularly user friendly, and many borrowers consequently do not like using them. In order to permit the transport of a book through the bar code reader and security tag de-activator, the equipment is of necessity somewhat complex and also large. Significant precautions must be taken to ensure the equipment is entirely safe for unsupervised borrowers to use, despite the transport mechanisms required to move a book through the equipment.

It is a principal aim of the present invention to provide both apparatus of and a method for recording the handling of an article such as a library book, which overcomes the disadvantages discussed above.

Accordingly, one aspect of the present invention provides apparatus for recording the handling of an article carrying a bar code and a security tag, which apparatus comprises:
- a main frame supporting a movable sub-frame;
- a bar code reader adapted to read the bar code of an article placed on the main frame;
- security tag operating means mounted on the sub-frame and adapted to change the state of the security tag;
- a drive mechanism for the sub-frame, to move the sub-frame between first and second spaced-apart positions; and
- a control unit arranged to activate the bar code reader when an article has been placed on the main frame, and then to cause the drive arrangement to cycle the sub-frame between its first and second positions whilst activating the security tag operating means thereby to change the state of the security tag, provided a valid bar-code reading was performed on said article.

According to a second and closely related aspect of this invention, there is provided a method of changing the state of a security tag provided on an article also having an identifying bar code, which method comprises the steps of:
- placing the article on a main frame of apparatus arranged to effect said change of state of the security tag on the article, the apparatus including a sub-frame carrying security tag operating means mounted thereon which security tag operating means is adapted to change the state of the security tag on the article when active and disposed adjacent the tag;
- reading the bar code of the article and verifying the read bar code; and
- then cycling the sub-frame between its first and second positions whilst controlling the operation of the security tag operating means;
the apparatus being controlled to perform a read when an article has been placed on the main frame and then to cause the cycling movement of the sub-frame between its first and second positions whilst activating the security tag operating means only if a validated bar-code reading was obtained from said article.

Hereinafter, the invention will exclusively be discussed in relation to self-issuing systems for library books though the invention is applicable in other areas, as mentioned hereinbefore.

When using apparatus of this invention, a library book is not transported through equipment adapted to read a unique identifying bar code on that book and then, if appropriate, to de-activate a security tag associated with that book. Rather, the book is merely placed on a main frame and then the apparatus performs the required actions to complete the self-issue, without the book being moved. For example, the main frame may provide a simple flat upper surface on which a book is suitably positioned, whereafter the self-issuing cycle operates on an automatic basis. When completed, the user merely lifts the book off the surface and may leave the library.

In view of the above, the apparatus may be made relatively small and more attractive to users. There is no physical transportation of a book by the issuing system, and consequently no need to provide guards, a tunnel or other safety devices.

The surface on which a book is placed may have an aperture through which the bar code may be exposed to the bar code reader, located below that surface. Conveniently, the bar code reader is mounted on the sub-frame, for movement therewith. In the alternative, the bar code reader may be mounted above the surface, to read a bar code on the upper face of an article placed on the surface.

In the case of the issuing of a library book, the security tag operating means should be adapted to de-activate the security tag. Then, on return of the book to the library, the tag may be reactivated before the book is placed back on the shelves, ready for borrowing by someone else. However, it would be possible to adapt the apparatus of this invention so as also to perform activation of a security tag, thereby to simplify the returning process of a borrowed book.

In general, there are two types of security tags used with library books. Both are in the form of a relatively thin self-adhesive strip-like label which is inserted into the spine of the book or applied to the inside front or back cover of the book. Both types of security tag may be cycled between their active and de-activated states a very large number of times, by applying suitable magnetic fields to the strips. Both types have an active material and a magnetic material suitably disposed to permit the activation and de-activation by a magnetic field. In a so-called line-strip security tag, the two materials are overlaid in one long length, whereas in a so-called chip-strip security tag the magnetic material is in the form of chips, slugs or spots laid on to the active material. With a line-strip security tag, a relatively low strength DC field is required, which field is alternately polarised to change the state of the magnetic material into North/South/North/ South and so on a number of times, and typically 16 times, so changing the state of the tag. By contrast, with a chip-strip security tag a simple relatively low strength DC field is required.

The sub-frame may carry suitable coils to de-activate both kinds of security tag usually used with library books. Then, the control unit may energise the appropriate coil dependent upon the data determined by the reading of the bar code on the book. For example, a computer installation associated with the apparatus may carry a database including information about the kind of security tag on each book for which the database has an entry, whereby the reading of the unique identifying bar code on a book then permits the control unit to energise the appropriate coil to de-activate the security tag on that book.

The apparatus may include a card reader arranged to accept a borrower's library card, controlled by and supplying an output to the control unit. In addition, the apparatus may also include a detector for a book placed on the main frame. Then, on detecting a book on the apparatus and also performing a valid read on a borrower's card inserted into the card reader, the control unit may initiate a self-issuing cycle, of reading the bar code on the library book followed by de-activation of the security tag, provided of course that no entry in the database on the computer installation indicates that the proposed borrowing should not be permitted.

By way of example only, one specific embodiment of library book self-issuing apparatus constructed and arranged in accordance with the present invention will now be described in detail, with reference to the accompanying drawings, in which:-
Figure 1 is a general perspective view of the apparatus incorporated within a cabinet and forming a complete self-issuing system, with the top platen not shown for the sake of clarity;
Figure 2 is a perspective view of the apparatus which performs the reading of a bar code and de-activation of a security strip;
Figure 3 is a perspective view of the apparatus of Figure 2, partially from below; and
Figure 4 is a block diagram of the operation of the self-issuing apparatus of Figures 1 to 3.

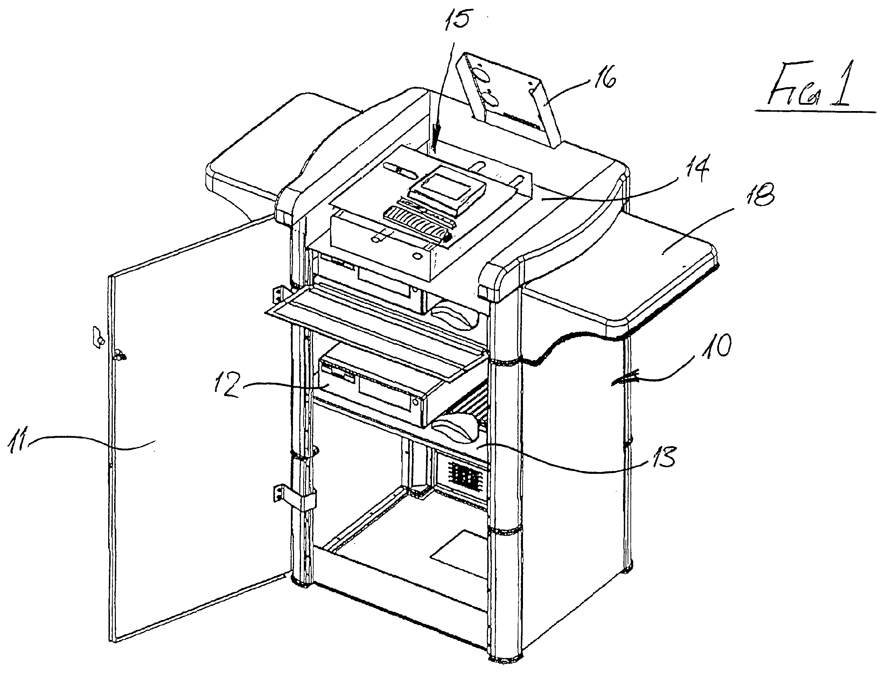

Referring initially to Figure 1, the self-issuing system including the embodiment of apparatus of this invention comprises a cabinet 10 including a lockable front door 11, a micro-computer 12 (such as a conventional PC running suitable programs) being accommodated within the cabinet, on shelf 13. If required, other equipment may also be accommodated within the cabinet, such as a printer. The cabinet has an upper shelf 14 on which the self-issuing apparatus 15 is mounted, which apparatus will be described in greater detail below. A mounting plate 16 is hinged to the rear of the cabinet and carries an upper platen for the cabinet, which platen is not shown in the drawings. That platen may be opaque, except for a central window through which a bar code on a library book may be exposed to the apparatus 15. Further, the platen may carry markings indicating the appropriate position for a library book to be issued to a borrower. For the convenience of users, two laterally projecting shelves 17,18 are provided on the sides of the cabinet.

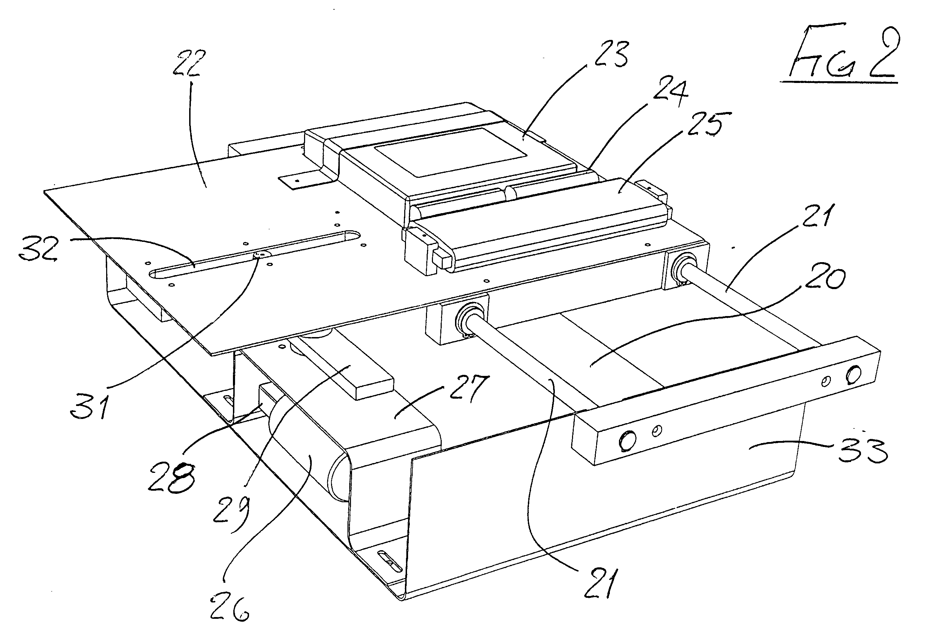

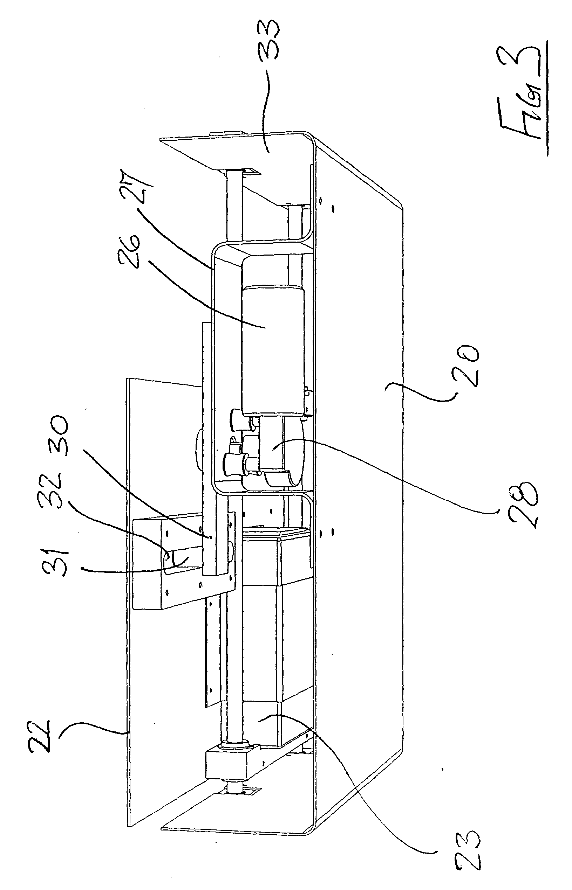

Referring now to Figures 2 and 3, the apparatus comprises a main frame 20 of a generally U-shaped form and which is secured to the upper shelf 14 of the cabinet. The frame supports a pair of rails 21 on which is slidably mounted a sub-frame 22, which sub-frame has a bar code reader 23, a first electromagnetic coil 24 and a second electromagnetic coil 25, all secured to the upper surface thereof. A servo-motor 26 is resiliently mounted on a U-shaped carrier 27 attached to the main frame 20, the motor driving a gearbox 28, the output shaft of which supports a rotatable crank 29. On the end of one arm 30 of the crank 29, there is provided a roller 31 engaged in a slot 32 of the sub-frame 22. Thus, rotation of the crank 29 through 360° from the position shown in Figures 2 and 3 will cause the sub-frame 22 to slide along rails 21 from the illustrated position to a position adjacent end 33 of the main frame 20 and back again to the illustrated position.

With the apparatus mounted in the cabinet 10, the sub-frame 22 slides backwards and forwards with respect to the front of the cabinet - that is to say, end 33 of the main frame is at the front of the cabinet and the starting position for the apparatus is with the sub-frame disposed adjacent that end of the main frame.

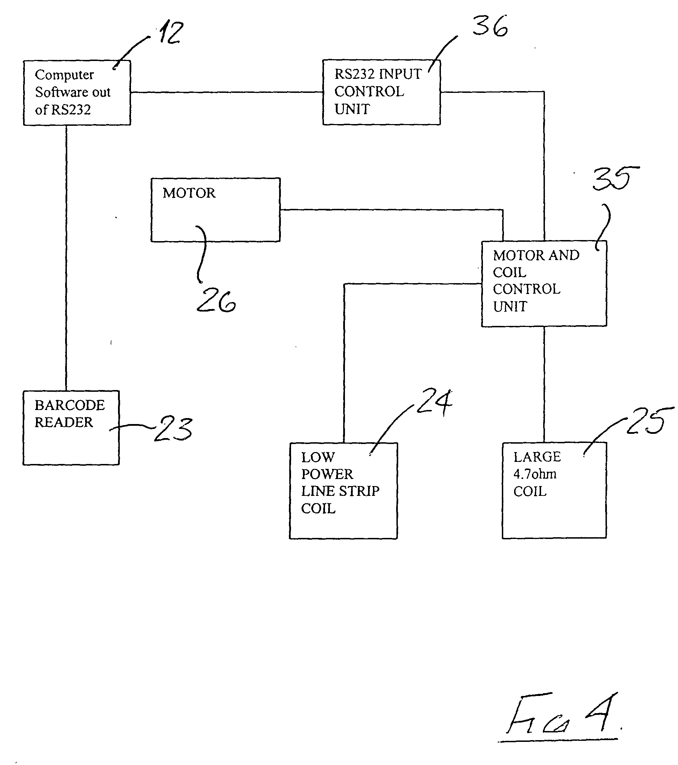

A control unit 35 for the operation of the apparatus is also provided within the cabinet 10 and is itself driven by the computer 12. The control unit provides appropriate control signals to the servo-motor 26, and also to the first coil 24 and the second coil 25. In this embodiment, the control is achieved using the RS232 serial port of the computer 12, connected to an RS232 input port 36 on the control unit 35, as shown in Figure 4. The bar code reader 23 is connected directly to the computer, for example through the same or another serial port thereof.

In use, a borrower inserts his library card into a reader (not shown) which also is connected to the computer 12. Also, the borrower places the book he wishes to borrow on the platen, in the appropriate position so that the bar code on the book is exposed to the bar code reader 23 on the sub-frame 22, below the platen. Provided the library card is validated by the computer, the bar code reader is activated to read the bar code on the book, and the parameters of that book are then determined from a database stored within the computer, including information about the kind of security tag on that book. The control unit 35 is then activated to drive the servo-motor 26 and to energise the appropriate coil 24 or 25. The motor operates to slide the sub-frame and so move the bar code reader away from the window in the platen and to move the energised coil past the security tag of the book, thereby to de-activate that tag. Finally, the computer database is up-dated, to show that the book has been lent to the borrower identified by the library card inserted into the card reader.

## Claims

1. Apparatus for recording the handling of an article carrying a bar code and a security tag, which apparatus comprises:
- a main frame (20) supporting a movable sub-frame (22);
- a bar code reader (23) adapted to read the bar code of an article placed on the main frame (20);
- security tag operating means (24,25) mounted on the sub-frame (22) and adapted to change the state of the security tag;
- a drive mechanism (26,29,31,32) for the sub-frame, to move the sub-frame (22) between first and second spaced-apart positions; and
- a control unit (35) arranged to activate the bar code reader (23) when an article has been placed on the main frame, and then to cause the drive arrangement (26,29,31,32) to cycle the sub-frame between its first and second positions whilst activating the security tag operating means (24,25) thereby to change the state of the security tag, provided a valid bar-code reading was performed on said article.

2. Apparatus as claimed in claim 1, wherein said upper surface has an aperture through which the bar code may be exposed to the bar code reader (23), located below the upper surface.

3. Apparatus as claimed in claim 2, wherein the bar code reader (23) is mounted on the sub-frame (22), for movement therewith.

4. Apparatus as claimed in claim 1, wherein the bar code reader (23) is mounted on the main frame (20) above the surface on which the article is placed, to read a bar code on the upper face of an article placed on said surface.

5. Apparatus as claimed in any of the preceding claims, wherein the security tag operating means (24,25) is adapted to de-activate the state of the security tag of an article placed on the main frame.

6. Apparatus as claimed in any of the preceding claims, wherein the security tag operating means comprises a DC multiple-coil electromagnet (24) of relatively low magnetic field strength which, when energised, de-activates a line-strip security tag.

7. Apparatus as claimed in any of claims 1 to 5, wherein the security tag operating means comprises a DC coil (25) producing a relatively low strength magnetic field, when energised, for the de-activation of a chip-strip security tag.

8. Apparatus as claimed in claim 8 and claim 9, wherein the sub-frame (22) supports both said DC multiple-coil electromagnetic coil (24) and said DC coil (25) and the control unit (35) is arranged to energise the appropriate coil dependent upon the data determined by the reading of the bar code on the article.

9. Apparatus as claimed in any of the preceding claims, wherein the drive mechanism for the sub-frame includes an electric motor (26) drivingly coupled to the sub-frame (22) to effect cycling movement thereof, the operation of which motor is controlled by the control unit (35).

10. Apparatus as claimed in any of the preceding claims, wherein a detector is provided for an article placed on the main frame (20) which detector provides an output to the control unit (35), the bar code reader (23) being activated by the control unit (35) when the control unit receives the output from the detector.

11. Apparatus as claimed in any of the preceding claims, wherein there is provided a card reader arranged to accept a user identity card, the control unit (35) controlling the operation of the card reader and accepting data from a read card, the control unit (35) activating the bar code reader (23) only after obtaining a valid read from a card inserted in the card reader.

12. A method of changing the state of a security tag provided on an article also having an identifying bar code, which method comprises the steps of:
- placing the article on a main frame (20) of apparatus arranged to effect said change of state of the security tag on the article, the apparatus including a sub-frame (22) carrying security tag operating means (24,25) mounted thereon which security tag operating means is adapted to change the state of the security tag on the article when active and disposed adjacent the tag;
- reading the bar code of the article and verifying the read bar code; and
- then cycling the sub-frame (22) between its first and second positions whilst controlling the operation of the security tag operating means;
the apparatus being controlled to perform a read when an article has been placed on the main frame (20) and then to cause the cycling movement of the sub-frame (22) between its first and second positions whilst activating the security tag operating means only if a validated bar-code reading was obtained from said article.

13. A method as claimed in claim 12, wherein the article carries one of a line-strip security tag, or a chip-strip security tag and the sub-frame carries separate de-activating coils for both line strip and chip-strip security tags, the appropriate de-activating coil being energised by the control unit on reading the bar code of an article placed on the main frame and verifying the read bar code.

14. A method as claimed in claim 13, in which the handling of the article to be recorded comprises the issue of a library book to a borrower.
